**Europäisches Patentamt**

**European Patent Office**

**Office européen des brevets**

(19)

(11) Veröffentlichungsnummer: **0 190 104 B1**

(12) **EUROPÄISCHE PATENTSCHRIFT**

(45) Veröffentlichungstag der Patentschrift:
24.01.90

(21) Anmeldenummer: 86810045.4

(22) Anmeldetag: 27.01.86

(51) Int. Cl.⁴: **C08F 8/12**, C08F 22/06

(54) Herstellung von hydrolysiertem Polymaleinsäureanhydrid.

(30) Priorität: 31.01.85 GB 8502499

(43) Veröffentlichungstag der Anmeldung:
06.08.86 Patentblatt 86/32

(45) Bekanntmachung des Hinweises auf die Patenterteilung:
24.01.90 Patentblatt 90/4

(84) Benannte Vertragsstaaten:
BE DE FR GB IT NL

(56) Entgegenhaltungen:
DE-A- 1 520 684
DE-A- 2 031 507
FR-A- 1 366 468
FR-A- 2 359 157
US-A- 3 755 264

(73) Patentinhaber: CIBA-GEIGY AG, Klybeckstrasse 141,
CH-4002 Basel(CH)

(72) Erfinder: Burke, Peter Edward, 30 St. Leonard's Drive,
Timperley Cheshire WA15 7RS(GB)

ACTORUM AG

## Beschreibung

Vorliegende Erfindung betrifft die Herstellung von hydrolysiertem Polymaleinsäureanhydrid durch Polymerisation von Maleinsäureanhydrid und nachfolgende Hydrolyse des so entstandenen Polymeren.

Es ist bekannt, daß Maleinsäureanhydrid sich zu Polymeren verschiedener Molekulargewichte homopolymerisieren läßt, wofür verschiedene Polymerisationsmethoden in der Literatur beschrieben sind. Bei den bekannten Methoden handelt es sich um die Anwendung scharfer Bedingungen wie radioaktiver Strahlung, die Verwendung großer Katalysatormengen und/oder hohe Temperaturen.

FR-A 2 359 157 beschreibt die Herstellung von Polymaleinsäureanhydrid, worin zur Erhöhung der Reaktivität ein Gemisch aus Xylol und einem nichtreaktiven Lösungsmittel, wie zum Beispiel Tetrachlorethan, eingesetzt wird. Als Katalysator dient Di-tert.-butylperoxid, bevorzugt in Mengen von 20–35%.

Ferner ist es aus der DE-A 1 520 684 bekannt, niedere sekundäre aliphatische Alkohole als Reaktionsmedium bei der Herstellung von Mischpolymerisaten aus Maleinsäureanhydrid und einem anderen Monomer zu verwenden.

Es wurde überraschend gefunden, daß bei Zusatz eines Alkohols oder Glykols zum Maleinsäureanhydrid enthaltenden Reaktionsgemisch vor der Homopolymerisation die zur Erzeugung einer gegebenen Produktausbeute erforderliche Katalysatormenge erheblich verringert werden kann. Meistens beläuft sich die Verringerung auf etwa 50%.

Gegenstand der vorliegenden Erfindung ist dementsprechend ein Verfahren zur Herstellung von hydrolysiertem Polymaleinsäureanhydrid mit einem Molekulargewicht bis zu 3000, welches dadurch gekennzeichnet ist, daß man ein aus (a) Maleinsäureanhydrid, (b) einem reaktionsfähigen aromatischen Lösungsmittel, (c) einem Alkohol oder Glykol mit bis zu 4 Kohlenstoffatomen oder einem Ester eines solchen Alkohols oder Glykols mit Maleinsäure und (d) Di-tert.-butylperoxyd bestehendes Reaktionsgemisch erhitzt und dann das so entstandene Polymer hydrolysiert.

Als Alkohol eignen sich unter anderem Methanol, Aethanol, Propanol und Isobutanol. Zu geeigneten Glykolen zählen Aethylenglykol, 1,2-Propylenglykol und 1,3-Butylenglykol. Vorzugsweise verwendet man Methanol entweder als den Alkohol selbst oder als Maleinsäuredimethylester.

Als reaktionsfähiges aromatisches Lösungsmittel kann beispielsweise Xylol, ein Trimethylbenzol wie Pseudocumol oder Aethylbenzol oder ein Gemisch von diesen vorliegen. Xylol wird als Lösungsmittel bevorzugt, insbesondere ein handelsübliches Xylol, das bis zu 30% Aethylbenzol enthalten kann. Handelsubliches Xylol, das hier in den Beispielen verwendet wird, besitzt die folgende Zusammensetzung:-

p-Xylol 10,8–26,2 Gew.-%
m-Xylol 50,8–55,0 Gew.-%
o-Xylol 3,5–16,6 Gew.-%
Aethylbenzol 12,7–22,2 Gew.-%

Das Gewichtsverhältnis von Maleinsäureanhydrid zu aromatischem Lösungsmittel im Reaktionsgemisch kann im Bereich von 1:1 bis 1:3, vorzugsweise 1:1 bis 1:2, liegen.

Das Molverhältnis des Alkohols oder Glykols zu Maleinsäureanhydrid kann 0,5:2 bis 1,2:2, vorzugsweise 0,9:2 bis 1,1:2, betragen.

Die Menge an Di-tert.-butylperoxyd kann sich auf 7,5 bis 40 Gew.-% bezogen auf Maleinsäureanhydrid belaufen, vorzugsweise 7,5 bis 20 Gew.-% und besonders bevorzugt 10 bis 20 Gew.-%. Mengen bis zu 40% sind zwar verwendbar, doch besteht normalerweise keine Notwendigkeit, Mengen über 20% einzusetzen, da die Produktausbeute üblicherweise bei Anwendung von höchstens 20% Katalysator zufriedenstellend ist.

Das Di-tert.-butylperoxyd kann man langsam über einen Zeitraum von beispielsweise bis zu 5 Stunden zugeben. Die Zugabe erfolgt vorzugsweise zu einem Gemisch aus Maleinsäureanhydrid, Lösungsmittel und Alkohol, Glykol oder Ester, das sich bei der Reaktionstemperatur befindet. Die Polymerisationsreaktion kann man bei erhöhter Temperatur, beispielsweise 120° bis 145°C, vorzugsweise 130° bis 145°C, durchführen.

Nach der Zugabe des Katalysators kann man das Reaktionsgemisch bei der Reaktionstemperatur halten, um die Polymerisation zu vervollständigen, was üblicherweise nach ungefähr 1 Stunde der Fall ist.

Nach Beendigung der Polymerisation kann man das Polymere mit Wasser, einer Säure, z.B. einer Mineralsäure, oder einem Alkali, z.B. einem Alkalihydroxyd, vorzugsweise mit Wasser hydrolysieren. Bei der Hydrolyse setzen sich die Anhydridgruppen zu Säuregruppen um. Das Lösungsmittel ist durch Dampfdestillation entfernbar.

Das nach dem erfindungsgemässen Verfahren erhaltene Polymere besitzt ein Molekulargewicht im Bereich von 300 bis 3000, vorzugsweise 300 bis 2000, gemessen mit einem Dampfdruckosmometer in Dioxan- oder 2-Butanon-Lösung.

Polymaleinsäureanhydrid bzw. dessen Derivate sind für verschiedene wichtige Zwecke nützlich. Beispielsweise zeigen Polymaleinsäure und insbesondere deren wasserlösliche Salze Schwellenwert- und Kristallmodifikationseffekte, die man zur Beherrschung von Kesselstein, wie er sich in Dampfkesseln, Verdampfern und technischen Kuhlanlagen bildet, ausnutzen kann. Sie sind ferner speziell als chemische Zwischenprodukte, als Zusätze zu anderen Polymersystemen und als Korrosionsschutzmittel für Metalloberflächen, besonders in Gegenwart von Zinksalzen, verwendbar. Man kann sie auch als Aufbaustoffe für Waschmittel benutzen.

Die Erfindung wird durch die nachfolgenden Beispiele erläutert, wobei "Teile" Gewichtsteile bedeuten.

## Beispiel 1

Man erhitzt 200 Teile (2,041 Mol) Maleinsäureanhydrid, 30 Teile (0,938 Mol) Methanol und 232 Teile (2,189 Mol) handelsübliches Xylol unter Rühren zum Rückfluss und versetzt das Gemisch unter Rückfluss im Verlauf von 2,5 Stunden mit 33 Teilen (0,226 Mol) Di-t-butylperoxyd. Die Reaktionsmasse wird dann eine Stunde unter Rückfluss erhitzt, bevor man sie auf 90°C abkühlt und mit 350 Teilen (19,44 Mol) warmem Wasser hydrolysiert. Das nicht umgesetzte Xylol wird dampfdestilliert und das Produkt auf 47-53 gew.%-ige wässrige Lösung eingestellt. Die Lösung enthält 241 Teile Polymer mit einem Gewichtsdurchschnittsmolekulargewicht von 670.

Vergleich

Wird die obige Verfahrensweise in Abwesenheit von Methanol und unter Verwendung von 66 Teilen (0,452 Mol) Di-t-butylperoxyd wiederholt, so enthält die entstandene Lösung 236 Teile Polymer mit einem Gewichtsdurchschnittsmolekulargewicht von 780.

Beispiel 2

Man erhitzt 200 Teile (2,041 Mol) Maleinsäureanhydrid, 77,6 Teile (1,021 Mol) 1,2-Propylenglykol und 232 Teile (2,189 Mol) handelsübliches Xylol unter Rühren zum Rückfluss und versetzt im Verlauf von 2,5 Stunden bei Ruckfluss mit 33 Teilen (0,226 Mol) Di-t-butylperoxyd. Die Masse wird noch 1 Stunde am Rückfluss erhitzt, bevor man sie wie in Beispiel 1 abkühlt und hydrolysiert. Die entstandene Lösung enthält 258 Teile Polymer mit einem Gewichtsdurchschnittsmolekulargewicht von 1800.

Beispiel 3

Man erhitzt 200 Teile (2,041 Mol) Maleinsäureanhydrid, 69,4 Teile (0,94 Mo1) Isobutanol und 232 Teile (2,189 Mol) handelsübliches Xylol unter Rühren zum Rückfluss und versetzt im Verlauf von 2,5 Stunden bei Rückfluss mit 33 Teilen (0,226 Mol) Di-t-butylperoxyd. Man hält die Reaktionsmasse noch 1 Stunde am Rückfluss, bevor man sie wie in Beispiel 1 abkühlt und hydrolysiert. Die entstandene Lösung enthält 322 Teile Polymer mit einem Gewichtsdurchschnittsmolekulargewicht von 800.

Beispiel 4

Man erhitzt 200 Teile (2,041 Mol) Maleinsäureanhydrid, 30 Teile (0,938 Mol) Methanol und 232 Teile (2,189 Mol) handelsübliches Xylol unter Rühren zum Rückfluss (142-144°C) und versetzt im Verlauf von 5 Stunden das Gemisch am Rückfluss mit 66 Teilen (0,452 Mol) Di-tert.-butylperoxyd. Die Reaktionsmasse wird dann 1 Stunde am Rückfluss erhitzt, bevor man sie wie in Beispiel 1 beschrieben auf 90°C abkühlt und hydrolysiert. Die entstandene Lösung enthält 274 Teile Polymer mit einem Gewichtsdurchschnittsmolekulargewicht von 680.

Beispiel 5

Man erhitzt 194,6 Teile (1,986 Mol) Maleinsäureanhydrid, 8,7 Teile (0,06 Mol) Maleinsäuredimethylester und 232 Teile (2,189 Mol) handelsübliches Xylol unter Rühren zum Rückfluss und versetzt im Verlauf von 2,5 Stunden bei Rückfluss mit 33 Teilen (0,226 Mol) Di-t-butylperoxyd. Die Reaktionsmasse wird noch 1 Stunde am Rückfluss erhitzt, bevor man sie wie in Beispiel 1 abkühlt und hydrolysiert. Die entstandene Lösung enthält 232 Teile Polymer mit einem Gewichtsdurchschnittsmolekulargewicht von 665.

Beispiel 6

Man wiederholt Beispiel 1, jedoch unter Zugabe von 26,4 Teilen (0,18 Mol) Di-t-butylperoxyd zum Gemisch unter Rückfluss im Verlauf von 2 Stunden. Die entstandene Lösung enthält 204 Teile Polymer mit einem Gewichtsdurchschnittsmolekulargewicht von 660.

Beispiel 7

Man erhitzt 189 Teile (1,1929 Mol) Maleinsäureanhydrid, 16,2 Teile (0,112 Mol) Maleinsäuredimethylester und 232 Teile (2,189 Mol) handelsübliches Xylol unter Rühren zum Rückfluss und versetzt im Verlauf von 1,75 Stundèn das Gemisch unter Rückfluss mit 23,1 Teilen (0,158 Mol) Di-t-butylperoxyd. Die Reaktionsmasse wird noch 1 Stunde am Rückfluss erhitzt, bevor man sie abkühlt und hydrolysiert. Die entstandene Lösung enthält 234 Teile Polymer mit einem Gewichtsdurchschnittsmolekulargewicht von 680.

Man beschickt einen Kolben mit 200 Teilen (2,04 Mol) Maleinsäureanhydrid, 30 Teilen Methanol (0,938 Mol) und 232 Teilen Cumol (1,93 Mol) und erhitzt auf 146°C. Man beginnt zu rühren, sobald sich die Stoffe aufgelöst haben, und versetzt im Verlauf von 2,5 Stunden mit 33 Teilen (0,226 Mol) Di-t-butylperoxyd. Nach beendeter Zugabe wird die Masse bei 140°C unter Rückfluss erhitzt und 1 Stunde lang bei dieser Temperatur gehalten, bevor man sie wie in Beispiel 1 hydrolysiert. Die entstandene Lösung enthält 233 g Polymer mit einem Gewichtsdurchschnittsmolekulargewicht von 667.

**Patentansprüche**

1. Verfahren zur Herstellung von hydrolysiertem Polymaleinsäureanhydrid mit einem Molekulargewicht bis zu 3000, dadurch gekennzeichnet, daß man ein aus (a) Maleinsäureanhydrid, (b) einem reaktionsfähigen aromatischen Lösungsmittel, (c) einem Alkohol oder Glykol mit bis zu 4 Kohlenstoffatomen oder einem Ester eines solchen Alkohols oder Glykols mit Maleinsäure und (d) Di-tert.-butylperoxyd bestehendes Reaktionsgemisch erhitzt und dann das so entstandene Polymer hydrolysiert.

2. Verfahren nach Anspruch 1, dadurch gekennzeichnet, daß das Molverhältnis des Alkohols oder Glykols zu Maleinsäureanhydrid 0,5:2 bis 1,2:2 beträgt.

3. Verfahren nach Anspruch 2, dadurch gekennzeichnet, daß das Molverhältnis des Alkohols oder Glykols zu Maleinsäureanhydrid 0,9:2 bis 1,1:2 beträgt.

4. Verfahren nach Anspruch 1, dadurch gekennzeichnet, daß als Alkohol Methanol, Aethanol, Propanol oder Isobutanol vorliegt.

5. Verfahren nach Anspruch 1, dadurch gekennzeichnet, daß als Glykol Aethylenglykol, 1,2-Propylenglykol oder 1,3-Butylenglykol vorliegt.

6. Verfahren nach Anspruch 1, dadurch gekennzeichnet, daß als Ester Maleinsäuredimethylester vorliegt.

7. Verfahren nach Anspruch 1, dadurch gekennzeichnet, daß die Menge an Di-tert.-butylperoxyd 7,5 bis 20 Gew.-% auf Maleinsäureanhydrid beträgt.

8. Verfahren nach Anspruch 7, dadurch gekennzeichnet, daß die Menge an Di-tert.-butylperoxyd 10 bis 20 Gew.-% auf Maleinsäureanhydrid beträgt.

9. Verfahren nach Anspruch 1, dadurch gekennzeichnet, daß man die Di-tert.-butylperoxydmenge langsam über einen Zeitraum bis zu 5 Stunden zugibt.

10. Verfahren nach Anspruch 1, dadurch gekennzeichnet, daß man bei einer Temperatur von 120° bis 145°C arbeitet.

11. Verfahren nach Anspruch 1, dadurch gekennzeichnet, daß als reaktionsfähiges aromatisches Lösungsmittel Xylol, Pseudocumol, Aethylbenzol oder ein Gemisch davon vorliegt.

12. Verfahren nach Anspruch 11, dadurch gekennzeichnet, dass als Lösungsmittel ein handelsübliches Xylol mit einem Aethylbenzolgehalt bis zu 30 Gew.-% vorliegt.

13. Verfahren nach Anspruch 1, dadurch gekennzeichnet, dass das Gewichtsverhältnis von Maleinsäureanhydrid zu Lösungsmittel 1:1 bis 1:3 beträgt.

14. Verfahren nach Anspruch 13, dadurch gekennzeichnet, dass das Gewichtsverhältnis von Maleinsäureanhydrid zu Lösungsmittel 1:1 bis 1:2 beträgt.

15. Verfahren nach Anspruch 1, dadurch gekennzeichnet, dass man das so erhaltene Produkt mit Wasser, einer Säure oder einem Alkali hydrolysiert.

## Claims

1. A process for the production of hydrolysed polymaleic anhydride having a molecular weight of up to 3000 which comprises heating a reaction mixture comprising (a) maleic anhydride, (b) a reactive aromatic solvent, (c) an alcohol or glycol having up to 4 carbon atoms or an ester of such an alcohol or glycol with maleic acid, and (d) di-tert-butyl peroxide, and then hydrolysing the resulting polymer.

2. A process according to claim 1, wherein the molar ratio of alcohol glycol to maleic anhydride is from 0.5:2 to 1.2:2.

3. A process according to claim 2, wherein the molar ratio of alcohol or glycol to maleic anhydride is from 0.9:2 to 1.1:2.

4. A process according to claim 1, wherein the alcohol is methanol, ethanol, propanol or isobutanol.

5. A process according to claim 1, wherein the glycol is ethylene glycol, 1,2-propylene glycol or 1,3-butylene glycol.

6. A process according to claim 1, wherein the ester is dimethyl maleate.

7. A process according to claim 1, wherein the amount of di-tert-butyl peroxide is from 7.5 to 20% by weight of maleic anhydride.

8. A process according to claim 7, wherein the amount of di-tert-butyl peroxide is from 10 to 20% by weight of maleic anhydride.

9. A process according to claim 1, wherein the di-tert-butyl peroxide is added slowly over a period of up to 5 hours.

10. A process according to claim 1, which is carried out at a temperature of 120° to 145°C.

11. A process according to claim 1, wherein the reactive aromatic solvent is xylene, pseudo-cumene, ethyl benzene or a mixture thereof.

12. A process according to claim 11, wherein the solvent is a commercial xylene containing up to 30% by weight of ethyl benzene.

13. A process according to claim 1, wherein the ratio of maleic anhydride to solvent is from 1:1 to 1:3 by weight.

14. A process according to claim 13, wherein the ratio of maleic anhydride to solvent is from 1:1 to 1:2 by weight.

15. A process according to claim 1, wherein the resulting product is hydrolysed by water, an acid or an alkali.

## Revendications

1. Procédé pour préparer un poly(anhydride maléique) hydrolysé dont la masse moléculaire peut aller jusqu'à 3000, procédé caractérisé en ce qu'on chauffe un mélange réactionnel constitué (a) d'anhydride maléique, (b) d'un solvant aromatique réactif, (c) d'un alcool ou d'un glycol contenant au plus 4 atomes de carbone, ou d'un ester dérivant d'un tel alcool ou glycol et de l'acide maléique, et (d) de peroxyde de di-tert-butyle, puis on hydrolyse le polymère ainsi formé.

2. Procédé selon la revendication 1, caractérisé en ce que le rapport molaire de l'alcool ou du glycol à l'anhydride maléique est compris entre 0,5:2 et 1,2:2.

3. Procédé selon la revendication 2, caractérisé en ce que le rapport molaire de l'alcool ou du glycol à l'anhydride maléique est compris entre 0,9:2 et 1,1:2.

4. Procédé selon la revendication 1, caractérisé en ce qu'on utilise, comme alcool, le méthanol, l'éthanol, le propanol ou l'isobutanol.

5. Procédé selon la revendication 1, caractérisé en ce qu'on utilise, comme glycol, l'éthylène-glycol, le propane-diol-1,2 ou le butane-diol-1,3.

6. Procédé selon la revendication 1, caractérisé en ce qu'on utilise, comme ester, le maléate de diméthyle.

7. Procédé selon la revendication 1, caractérisé en ce que la quantité du peroxyde de di-tert-butyle est comprise entre 7,5 et 20% en poids par rapport à l'anhydride maléique.

8. Procédé selon la revendication 7, caractérisé en ce que la quantité du peroxyde de di-tert-butyle est comprise entre 10 et 20% en poids par rapport à l'anhydride maléique.

9. Procédé selon la revendication 1, caractérisé en ce que la quantité de peroxyde de di-tert-butyle est ajoutée lentement en un temps qui peut aller jusqu'à 5 heures.

10. Procédé selon la revendication 1, caractérisé en ce qu'on opère à une température comprise entre 120 et 145°C.

11. Procédé selon la revendication 1, caractérisé en ce qu'on utilise, comme solvant aromatique réactif, un xylène, le pseudocumène, l'éthylbenzène ou un mélange de ceux-ci.

12. Procédé selon la revendication 11, caractérisé en ce qu'on utilise, comme solvant, un xylène du commerce dont la teneur en éthylbenzène peut aller jusqu'à 30% en poids.

13. Procédé selon la revendication 1, caractérisé en ce que le rapport pondéral de l'anhydride maléique au solvant est compris entre 1:1 et 1:3.

14. Procédé selon la revendication 13, caractérisé en ce que le rapport pondéral de l'anhydride maléique au solvant est compris entre 1:1 et 1:2.

15. Procédé selon la revendication 1, caractérisé en ce que le produit ainsi obtenu est hydrolysé par de l'eau, par un acide ou par un alcali.